# EUROPÄISCHE PATENTSCHRIFT

(11) **EP 1 451 054 B1**
(45) Veröffentlichungstag und Bekanntmachung des Hinweises auf die Patenterteilung: **24.01.2007**
(21) Anmeldenummer: 02791602.2
(22) Anmeldetag: 03.12.2002
(51) Int. Cl.: B62B 3/14

(54) **EINKAUFSWAGEN**
SHOPPING CART
CHARIOT

(30) Priorität: 04.12.2001 DE 10159376
(43) Veröffentlichungstag der Anmeldung: 01.09.2004
(73) Patentinhaber: WANZL METALLWARENFABRIK GMBH, D-89336 Leipheim (DE)
(72) Erfinder: FROMMHERZ, Bernd, 79793 Wutöschingen/Horheim (DE)
(86) Internationale Anmeldenummer: PCT/DE2002/004418
(87) Internationale Veröffentlichungsnummer: WO 2003/047938

(56) Entgegenhaltungen:
- DE-U- 8 913 394
- DE-U- 20 205 502
- DE-U- 20 209 885
- FR-A- 2 523 060
- US-A- 5 012 966
- US-B1- 6 406 041

## Beschreibung

Die Erfindung betrifft einen Einkaufswagen mit einem Korb, bei dem an der Innenseite seiner Stirnwand eine Kleinartikelschale befestigt ist. Ein derartiger Einkaufswagen wird zum Beispiel von der DE 89 13 394 U gezeigt.

Bei bekannten Einkaufswagen sind jene Mittel, die zum Befestigen einer Kleinartikelschale erforderlich sind, durch haken- oder ösenartige Elemente gebildet, die sichtbar insbesondere an der Stirnwand des Korbes störend wirken.

Es ist Aufgabe der Erfindung, bei einem Einkaufswagen der hier vorliegenden Art jene Mittel, die zur Befestigung der Kleinartikelschale an der Stirnwand des Korbes erforderlich sind, so zu wählen und zu gestalten, dass diese sich nicht als störend erweisen.

Die Lösung der Aufgabe besteht darin, dass die Stirnwand ausgehend von ihrem oberen Rand, einen Einschnitt aufweist, auf dem die Kleinartikelschale abgestützt ist und dass eine Klemmleiste vorgesehen ist, die zum Verschließen des Einschnittes und zum zusätzlichen Sichern der Kleinartikelschale bestimmt ist.

Der Klemmleiste kommt eine besondere Bedeutung zu, da sie sich in vorteilhafter Weise nicht nur zum zusätzlichen Sichern der Kleinartikelschale eignet, sondern auch den Einschnitt an der Stirnwand sowie jene Einzelheiten an der Kleinartikelschale abdeckt, die zum Abstützen der Kleinartikelschale am Einschnitt vorgesehen sind. Die Klemmleiste vermittelt nicht den störenden Eindruck, der haken- oder ösenartigen Elementen zu eigen ist. Dies umso weniger, wenn gemäß einer Ausgestaltung der Erfindung die Klemmleiste ganz bewusst als Griffleiste ausgebildet oder gestaltet ist.

Die Erfindung wird anhand von Zeichnungen näher erläutert. Es zeigt
Fig. 1 einen Einkaufswagen mit Blick auf die Stirnwand des Korbes sowie
Fig. 2 den Aufsetz- und Sicherungsvorgang der Kleinartikelschale.

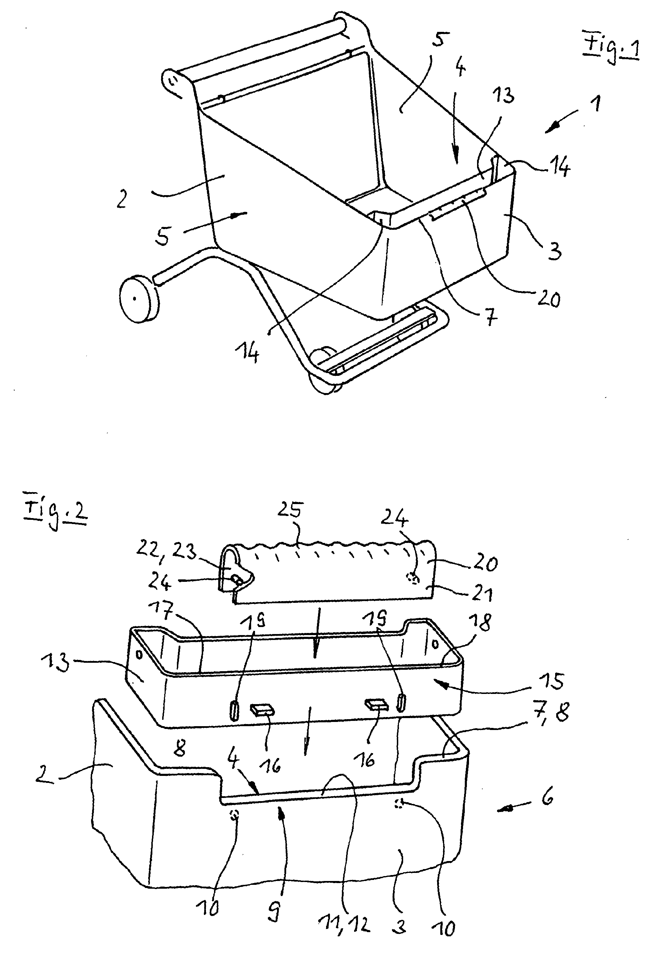

Der in Fig. 1 dargestellte, mit gleichen Wagen stapelbare Einkaufswagen 1 entspricht jener bewährten Form von Einkaufswagen 1, wie sie allgemein bekannt ist. Eine Beschreibung von Details, die zur hier vorliegenden Erfindung nicht notwendig sind, erübrigt sich deshalb. An der Innenseite 4 der Stirnwand des Korbes 2 ist eine Kleinartikelschale 13 befestigt, die zur Aufnahme von druckempfindlichen Gütern, wie z.B. Sahne- oder Joghurtbechern, bestimmt ist. Die Kleinartikelschale 13 endet mit ihren beiden Seiten 14 an den Seitenwänden 5 des Korbes 2 und ist an diesen angeschraubt. Am oberen Rand 7 der Stirnwand 3 ist eine Klemmleiste 20 angeordnet, die einen U-förmigen Querschnitt aufweist und deren Funktion nachfolgend beschrieben ist.

Fig. 2 zeigt den vorderen Bereich 6 des Korbes 2 zusammen mit dessen Stirnwand 3. Ausgehend vom oberen Rand 7 der Stirnwand 3 erstreckt sich ein Einschnitt 11 nach unten. In einem vertikalen Abstand zur Stirnwand 3 ist die Kleinartikelschale 13 dargestellt, die in Pfeilrichtung auf die Stirnwand 3 aufsetzbar ist. An der Vorderwand 15 der Kleinartikelschale 13 sind Vorsprünge 16 angeordnet, die zum Abstützen der Kleinartikelschale 13 auf dem horizontalen Abschnitt 12 des Einschnittes 11 bestimmt sind. In aufgesetztem Zustand liegt die Kleinartikelschale 13 an der Innenseite 4 der Stirnwand 3 an, wobei sich der obere Rand 17 der Kleinartikelschale 13 annähernd auf gleicher horizontaler Ebene befindet wie die beiden oberen Randabschnitte 8 der Stirnwand 3. Über der Kleinartikelschale 13 ist die Klemmleiste 20 eingezeichnet, welche von oben her auf die Kleinartikelschale 13 und auf den Einschnitt 11 der Stirnwand 3 aufsetzbar ist. Im aufgesetzten Zustand umfasst die Klemmleiste 20, die so breit ist wie der Einschnitt 11, den oberen Rand 18 der Vorderwand 15 der Kleinartikelschale 13 und liegt mit ihrem vorderen Schenkel 21 an einem schmalen horizontalen Bereich 9 an, der sich an der Außenseite der Stirnwand 3 an den Einschnitt 11 anschließt. An der Innenwand 23 des hinteren Schenkels 22 sind Vorsprünge 24 vorgesehen, die in aufgesetztem Zustand der Klemmleiste 20 durch Löcher 19 hindurchführen, die sich an der Vorderwand 15 der Kleinartikelschale 13 befinden. Die Vorsprünge 24 enden in Vertiefungen 10, die sich knapp unterhalb des Einschnittes 11 an der Innenseite 4 der Stirnwand 3 befinden. Die Vorsprünge 24 sind aufgrund geeigneter Formgebung rastschlüssig mit den Vertiefungen 10 verbunden, so dass die Klemmleiste 20, entsprechend gestaltet, mit der Vorderwand 15 der Kleinartikelschale 13 und mit der Stirnwand 3 des Korbes 2 verspannt ist. Die Klemmleiste 20 verschließt somit den Einschnitt 11 und sichert zusätzlich die Kleinartikelschale 13. Die Klemmleiste 20 weist an ihrer Oberseite bevorzugt Griffrillen 25 auf, so dass die Klemmleiste 20 auf diese Art und Weise den Charakter eines Sicherungsmittels verliert.
Der Korb 2, die Kleinartikelschale 13 sowie die Klemmleiste 20 sind bevorzugt aus Kunststoff gefertigt.

## Patentansprüche

1. Einkaufswagen (1) mit einem Korb (2), bei dem an der Innenseite (4) seiner Stirnwand (3) eine Kleinartikelschale (13) befestigt ist, **dadurch gekennzeichnet, dass** die Stirnwand (3), ausgehend von ihrem oberen Rand (7), einen Einschnitt (11) aufweist, auf dem die Kleinartikelschale (13) abgestützt ist und dass eine Klemmleiste (20) vorgesehen ist, die zum Verschließen des Einschnittes (11) und zum zusätzlichen Sichern der Kleinartikelschale (13) bestimmt ist.

2. Einkaufswagen nach Anspruch 1, **dadurch gekennzeichnet, dass** sich die Kleinartikelschale (13) mit Hilfe von Vorsprüngen (16) abstützt, die sich an der Vorderwand (15) der Kleinartikelschale (13) befinden.

3. Einkaufswagen nach Anspruch 1 oder 2, **dadurch gekennzeichnet, dass** die Klemmleiste (20) rastschlüssig mit der Stirnwand (3) des Korbes (2) verbunden ist.

4. Einkaufswagen nach einem der Ansprüche 1 bis 3, **dadurch gekennzeichnet, dass** die Klemmleiste (20) einen U-förmigen Querschnitt aufweist.

5. Einkaufswagen nach einem der Ansprüche 1 bis 4, **dadurch gekennzeichnet, dass** die Klemmleiste (20) einen vorderen und einen hinteren Schenkel (21, 22) aufweist und dass am hinteren Schenkel (22) Vorsprünge (24) vorgesehen sind, die in aufgesetztem Zustand der Klemmleiste (20) durch an der Kleinartikelschale (13) befindliche Löcher (19) hindurchführen und in Vertiefungen (10) enden, die sich an der Innenseite (4) der Stirnwand (3) befinden.

6. Einkaufswagen nach einem der Ansprüche 1 bis 5, **dadurch gekennzeichnet, dass** die Klemmleiste (20) an ihrer Oberseite mit Griffrillen (25) ausgestattet ist.

7. Einkaufswagen nach einem der Ansprüche 1 bis 6, **dadurch gekennzeichnet, dass** die Kleinartikelschale (13) mit den Seitenwänden (5) des Korbes (2) verschraubt ist.

## Claims

1. A shopping trolley (1) with a basket (2), wherein a small-item tray (13) is fixed to the inside (4) of its end wall (3), **characterised in that** the end wall (3), starting from its upper edge (7), has an indentation (11) on which the small-item tray (13) is supported, and **in that** a clamping strip (20) is provided for closing the indentation (11) and for additionally securing the small-item tray (13).

2. A shopping trolley (1) according to claim 1, **characterised in that** the small-item tray (13) is supported by means of projections (16) provided on the front wall (15) of the small-item tray (13).

3. A shopping trolley according to claim 1 or 2, **characterised in that** the clamping strip (20) is connected in a snap-locking manner to the end wall (3) of the basket (2).

4. A shopping trolley according to any one of claims 1 to 3, **characterised in that** the clamping strip (20) has a U-shaped cross-section.

5. A shopping trolley according to any one of clams 1 to 4, **characterised in that** the clamping strip (20) has a front and a rear arm (21, 22) and **in that**, on the rear arm (22), projections (24) are provided which extend through holes (19) in the small-item tray (13) when the clamping strip (20) is mounted and finish in recesses (10) on the inside (4) of the end wall (3).

6. A shopping trolley according to any one of claims 1 to 5, **characterised in that** the top of the clamping strip (20) is provided with gripping grooves (25).

7. A shopping trolley according to any one of claims 1 to 6, **characterised in that** the small-item tray (13) is screwed to the side walls (5) of the basket (2).

## Revendications

1. Chariot de supermarché (1) avec un panier (2) dans lequel un bac pour petits articles (13) est fixé sur la face intérieure (4) de sa paroi avant (3), **caractérisé en ce que** la paroi frontale (3) présente, à partir de son bord supérieur (7), une entaille (11) sur laquelle le bac pour petits articles (13) prend appui et qu'il est prévu une baguette de serrage (20) qui est destinée à fermer l'entaille (11) et à bloquer en supplément le bac pour petits articles (13).

2. Chariot de supermarché selon la revendication 1, **caractérisé en ce que** le bac pour petits articles (13) prend appui avec l'aide de saillies (16) qui se trouvent sur la paroi avant (15) du bac pour petits articles (13).

3. Chariot de supermarché selon la revendication 1 ou 2, **caractérisé en ce que** la baguette de serrage (20) est reliée de manière solidaire par encliquetage à la paroi frontale (3) du panier (2).

4. Chariot de supermarché selon l'une quelconque des revendications 1 à 3, **caractérisé en ce que** la baguette de serrage (20) présente une section transversale en forme de U.

5. Chariot de supermarché selon l'une quelconque des revendications 1 à 4, **caractérisé en ce que** la baguette de serrage (20) présente une branche avant et une branche arrière (21, 22) et que sur la branche arrière (22) sont prévues des saillies (24) qui, lorsque la baguette de serrage (20) est montée, passent par des trous (19) se trouvant sur le bac pour petits articles (13) et aboutissent dans des creux (10) qui se trouvent sur la face intérieure de la paroi frontale (3).

6. Chariot de supermarché selon l'une quelconque des revendications 1 à 5, **caractérisé en ce que** la baguette de serrage (20) est munie de cannelures de poignée (25) sur sa face supérieure.

7. Chariot de supermarché selon l'une quelconque des revendications 1 à 6, **caractérisé en ce que** le bac pour petits articles (13) est vissé avec les parois latérales du panier (2).
